# EUROPÄISCHE PATENTANMELDUNG

(11) **EP 2 390 124 A1**
(43) Veröffentlichungstag der Anmeldung: **30.11.2011**
(21) Anmeldenummer: 11167020.4
(22) Anmeldetag: 23.05.2011
(51) Int. Cl.: B60H 1/00

(54) **Anordnung eines Wärmeübertragers**

(30) Priorität: 27.05.2010 DE 102010029366
(71) Anmelder: Behr GmbH & Co. KG, 70469 Stuttgart (DE)
(72) Erfinder: Feith, Thomas, 70825, Korntal-Münchingen (DE); Grieb, Andreas, 70499, Stuttgart (DE)
(74) Vertreter: Grauel, Andreas

(57) **Zusammenfassung**

Es wird eine Klimaanlage mit einem Verdampfer 406 und einem Heizkörper 401 offenbart, wobei Verdampfer 406 und Heizkörper 401 übereinander angeordnet werden. Hierdurch kann sich eine Klimaanlage ergeben, die im Vergleich zu Klimaanlagen des Stands der Technik eine kleine Grundfläche bei großer Höhe aufweist.

## Beschreibung

Die vorliegende Erfindung betrifft eine Klimaanlage für ein Kraftfahrzeug.

Im Stand der Technik sind Klimaanlagen bekannt, bei denen Verdampfer und Heizkörper in Strömungsrichtung hintereinander angeordnet sind.

Es ist ein generelles Bestreben der Entwickiungsbemühungen im Fahrzeugbau den Fahrzeuginsassen einen möglichst geräumigen Innenraum anbieten zu können. Andererseits werden in modernen Fahrzeugen eine stetig wachsende Zahl von technischen Komponenten mit neuen Funktionen integriert, wodurch sich ein steigender Raumbedarf für die Technik ergibt. Aus dieser Konstellation heraus ergibt sich die Forderung, den Innenraum eines Fahrzeugs möglichst optimal zu nutzen.

Fahrzeuge mit Frontantrieb und quer eingebautem Motor benötigen oftmals keinen Getriebetunnel, Der Raumbedarf eines obsolet gewordenen Getriebetunnels könnte durch andere Module eines Fahrzeugs, insbesondere eine Klimaanlage, in Anspruch genommen werden. Hierbei ist allerdings zu berücksichtigen, dieses freie Raum sich insbesondere durch eine kleine Grundfläche bei in vertikaler Richtung großer Ausdehnung auszeichnet.

Eine Aufgabe ist daher, eine Klimaanlage zur Verfügung zu stellen, deren räumliche Abmessungen dementsprechend ausgebildet sind.

Als erste Ausführungsform der Erfindung wird eine Klimaanlage für ein Kraftfahrzeug zur Verfügung gestellt, umfassend: einen Verdampfer zur Abkühlang von in die Klimaanlage einströmenden Luft und einen Heizkörper zum Aufheizen der Luft, wobei der Heizkörper und der Verdampfer zumindest teilweise Übereinander angeordnet sind.

Durch die zumindest teilweise übereinander gestapelte Anordnung von Verdampfer und Heizkörper kann eine Klimaanlage bereit gestellt werden, die höher ausgebildet ist und gleichzeitig eine geringere Grundfläche in Anspruch nimmt im Vergleich zu Klimaanlagen des Stands der Technik. Hierdurch kann eine erfindungsgemäße Klimaanlage zur Verfügung gestellt werden, die beispielsweise den Bauraum eines bei Fahrzeugen mit Frontantrieb und quer eingebautem Motor für den Getriebestrang oft nicht benötigten Getriebetunnels nutzt.

Die Übereinanderanordnung von Verdampfer und Heizkörper führt zu dem weiteren Vorteil, dass nicht die gesamte einströmende Luft durch den Verdampfer geleitet werden muss, Vielmehr kann durch Regelorgane, die alternativ als Rollband, als mittig gelagerte oder einseitig gelagerte Klappen, als Schaukelklappe, oder als eine Kombination mehrerer derartiger Klappen ausgebildet sein können, die einströmende Luft wahlweise bzw. teilweise bzw. verteilt durch den Verdampfer und/oder den Heizkörper geleitet werden. Es können dabei die Regelorgane strömungstechnisch vor und/oder nach dem Verdampfer und/oder Heizkörper angeordnet werden.

Aufgrund der erfindungsgemäßen Anordnung von Heizkörper und Verdampfer ist es möglich, dass der Luftstrom entweder komplett durch den Verdampfer oder komplett durch den Heizkörper oder anteilig durch Verdampfer und Heizkörper geleitet wird. Dazu ist ein Regelorgan, wie ein Luftstromsteuerelement, notwendig, wie es im Ausführungsbeispiel der Erfindung vorteilhaft gezeigt ist. Dadurch kann vermieden werden, dass die Luft immer durch den Verdampfer strömt und wahlweise durch den Heizkörper, was dazu führt, dass Luft, die nicht durch den Verdampfer geleitet werden muss, auch nicht abgekühlt und anschließend wieder erwärmt werden muss. Die Luft, die durch den Verdampfer strömt und die Luft, die durch den Heizkörper strömt, wird hinter Verdampfer bzw. Heizkörper wieder gemischt und zur Verteilung im Kraftfahrzeuginnenraum an die entsprechenden Auslassöffnungen weitergeleitet.

Beispielhafte Ausführungsformen werden in den abhängigen Ansprüchen beschrieben.

Gemäß einer beispielhaften Ausführungsform der Erfindung wird eine Klimaanlage zur Verfügung gestellt, wobei der Heizkörper über dem Verdampfer angeordnet ist.

Eine Anordnung des Heizkörpers über dem Verdampfer bedeutet, dass der Heizkörper in einer Richtung senkrecht zum Boden des Fahrzeugs oberhalb des Verdampfers angeordnet ist Eine derartige Anordnung hat den Vorteil, dass die Ableitung des Kondenswassers sicher gestellt ist.

In einer weiteren erfindungsgemäßen Ausführungsform wird eine Klimaanlage zur Verfügung gestellt, wobei der Heizkörper und der Verdampfer senkrecht zur Fahrtrichtung des Kraftfahrzeuges angeordnet sind.

Eine senkrechte Anordnung bietet den Vorteil, dass die Grundflache einer erfindungsgemäßen Klimaanlage sehr klein ausgebildet sein kann, wodurch auch dementsprechende Raumangebote innerhalb eines Fahrzeugs genutzt werden können.

Gemäß einem weiteren Ausführungsbeispiel der vorliegenden Erfindung wird eine Klimaanlage zur Verfügung gestellt, wobei der Verdampfer und der Heizkörper in einer Linie angeordnet sind.

Hierbei kann die Linie erfindungsgemäß auch zur Fahrtrichtung geneigt ausgebildet sein, wodurch der Raumbedarf in z-Richtung, also in Richtung senkrecht zum Boden des Fahrzeugs, reduziert werden kann, wobei aber gleichzeitig der Raumbedarf einer erfindungsgemäßen Klimaanlage in x-Richtung und/oder y-Richtung erhöht wird.

Gemäß einer beispielhaften Ausführungsform der Erfindung wird eine Klimaanlage zur Verfügung gestellt, wobei der Verdampfer und der Heizkörper nicht in einer Linie angeordnet sind.

Beispielsweise können der Verdampfer und der Heizkörper zumindest teilweise überlappend angeordnet werden, wodurch sich eine kompakte Bauweise einer erfindungsgemäßen Klimaanlage ergeben kann.

In einer weiteren erfindungsgemäßen Ausführungsform wird eine Klimaanlage zur Verfügung gestellt, wobei ein erster Strahl, der ausgehend vom Boden des Fahrzeuges durch den Verdampfer gerichtet ist, mit der Fahrzeugrichtung einen Winkel zwischen 90° und 180° aufspannt, wobei die Winkelwerte 90° und 180° nicht erreicht werden,

Gemäß, einem weiteren Ausfuhrungsbeispiel der vorliegenden Erfindung wird eine Klimaanlage zur Verfügung gestellt, wobei ein erster Strahl, der ausgehand vom Boden des Fahrzeuges durch den Verdampfer gerichtet ist, mit der Fahrzeugrichtung einen Winkel zwischen 0° und 90° aufspannt, wobei die Winkelwerte 0° und 90° nicht erreicht werden.

Gemäß einer beispielhaften Ausführungsform der Erfindung wird eine Klimaanlage zur Verfügung gestellt, wobei ein zweiter Strahl, der ausgehend vom Boden des Fahrzeuges durch den Heizkörper gerichtet ist, mit der Fahrzeugrichtung einen Winkel zwischen 90° und 180° aufspannt, wobei die Winkelwerte 90° und 180° nicht erreicht werden.

In einer weiteren erfindungsgemäßen Ausführungsform wird eine Klimaanlage zur Verfügung gestellt, wobei ein zweiter Strahl, der ausgehend vom Boden des Fahrzeuges durch den Heizkörper gerichtet ist, mit der Fahrzeugrichtung einen Winkel zwischen 0° und 90° aufspannt, wobei die Winkelwerte 0° und 90° nicht erreicht werden.

Als eine Idee der Erfindung kann angesehen werden, innerhalb einer Klimaanlage eines Fahrzeuges nicht eine Anordnung eines Verdampfers und eines Heizkörpers hintereinander vorzunehmen, sondern Verdampfer und Heizkörper räumlich übereinander anzuordnen, um so eine Klimaanlage zu erhalten, die ein Raumangebot eingepasst werden kann, das im Vergleich zur Grundfläche eine große Ausdehnung in der Höhe aufweist. Eine derartige Klimaanlage kann z.B. in einen Bereich eingebaut werden, der typischerweise für einen Getriebestrang vorgesehen ist, der allerdings bei einem Fahrzeug mit Frontantrieb mit quer eingebautem Motor nicht benötigt wird und daher ansonsten ungenutzt bleiben würde.

Die einzelnen Merkmale können selbstverstandlich auch untereinander kombiniert werden, wodurch sich zum Teil auch vorteilhafte Wirkungen einstehen können, die über die Summe der Einzelwirkungen hinausgehen.

Weitere Einzelheiten und Vorteile der Erfindung werden anhand der in den Zeichnungen dargestellten Ausführungsbeispiele deutlich. Es zeigen
Fig. 1 eine Klimaanlage des Stands der Technik,
Fig. 2 eine weitere Klimaanlage des Stands der Technik,
Fig. 3 eine weitere Klimaanlage des Stands der Technik,
Fig. 4 Teile einer erfindungsgemäßen Klimaanlage,
Fig. 5 Teile einer weiteren erfindungsgemäßen Klimaanlage,
Fig. 6 Teile einer weiteren erfindungsgemäßen Klimaanlage,
Fig. 7 eine erfindungsgemäße Klimaanlage im Längsschnitt,
Fig. 8 eine weitere erfindungsgemäße Klimaanlage im Längsschnitt,
Fig. 9 eine weitere erfindungsgemäße Klimaanlage im Querschnitt,
Fig. 10 eine weitere erfindungsgemäße Klimaanlage im Längsschnitt,

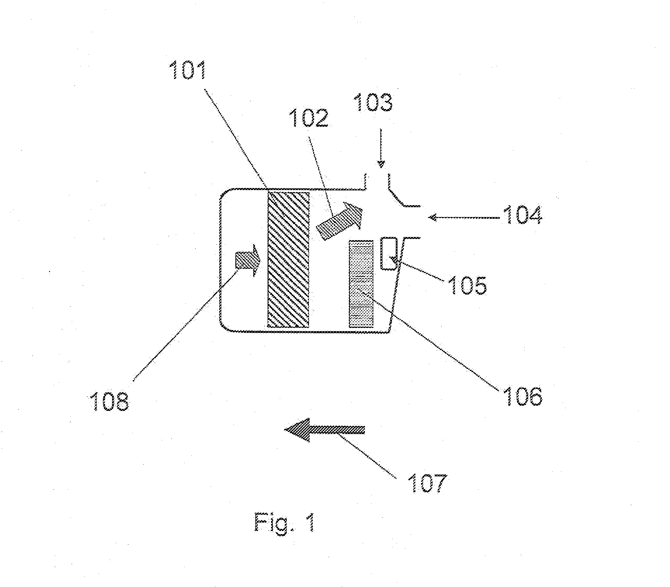

Fig. 1 zeigt eine Klimaanlage des Stands der Technik in einem Längsschnitt mit einem Verdampfer 101 zum Abkühlen der einströmenden Luft 108 und einem Heizkörper 106. Die abgekühlte Luft 102 kann wahlweise durch den Heizkörper 106 oder über ihn vorbei geleitet werden, wodurch sich ein Kaltweg oben ergibt. Die derart abgekühlte und/oder erwärmte oder nur abgekühlte Luft 102 kann wahlweise bzw. teilweise durch die Austrittsöffnungen Defrost 103, Belüftung 104 und/oder Fußraum 105 die Klimaanlage verlassen. Die Grundflächen des Verdampfers 101 und des Heizkörpers 106 sind in einer horizontalen Ebene angeordnet, d.h. der Verdampfer 101 und der Heizkörper 106 sind nebeneinander angeordnet.

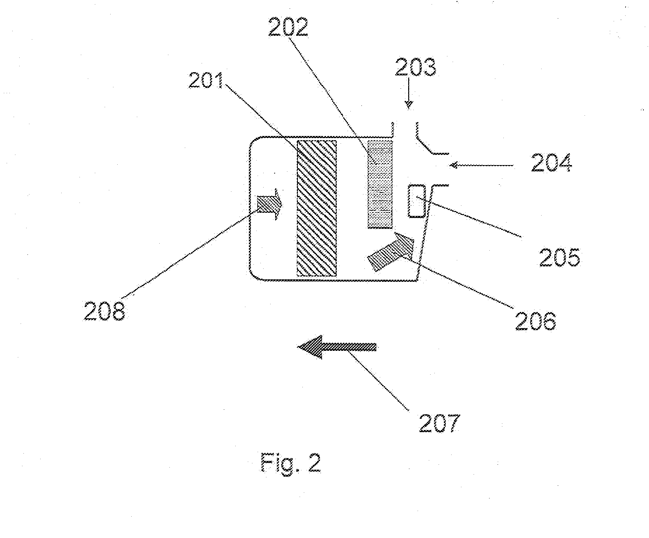

Fig. 2 zeigt eine weitere Klimaanlage des Stands der Technik in einem Längsschnitt, wobei die einströmende luft 208 durch einen Verdampfer 201 geleitet wird und durch und/oder unten vorbei an einem Heizkörper 202 geführt werden kann, wodurch sich ein Kaltweg unten ergibt. Die resultierende Luft 206 kann durch eine Austrittsöffnung Fußbereich 205 und/oder eine Austrittsöffnung Belüftung 204 und/oder eine Austrittsöffnung Defrost 203 die Klimaanlage verlassen.

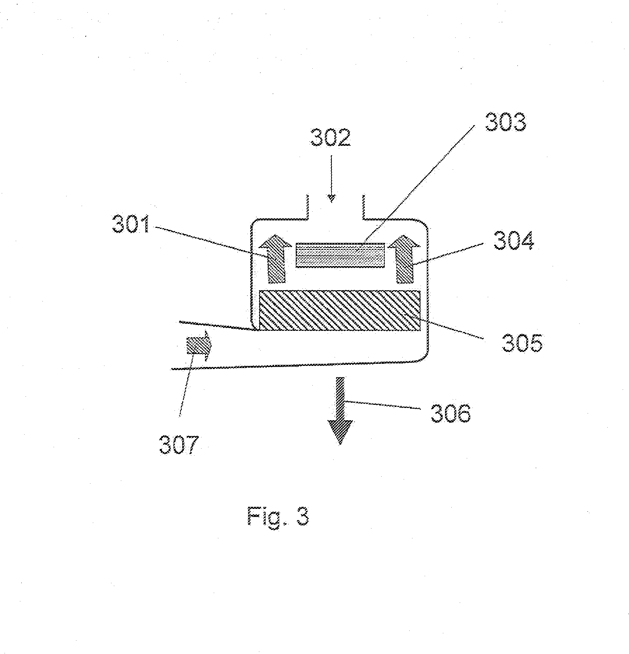

Fig. 3 zeigt eine weitere Klimaanlage des Stands der Technik in einem Längsschnitt. Die einströmende Luft 307 gelangt zunächst zum Verdampfer 305 und kann von dort an einem Heizkörper 303 seitlich vorbeigeführt werden bzw. durch einen Heizkörper 303 hindurchgeführt werden, wodurch sich ein bzw. zwei Kaltwege seitlich ergeben. Die resultierende Luft 301, 304 kann letzten Endes durch eine Austrittsöffnung 302 z.B. in den Fahrzeuginnenraum geleitet werden. Die Fahrtrichtung des Fahrzeugs in dem die Klimaanlage angeordnet ist, wird durch den Pfeil 306 dargestellt.

Insgesamt zeigen die Klimaanlagen des Stands der Technik eine sequentielle Anordnung von Verdampfer und Heizkörper, wobei Verdampfer und Heizkörper ungefähr in einer horizontalen Ebene platziert sind (x- und y-Richtung des Fahrzeugs, in dem die Klimaanlage eingebaut ist), d.h. Verdampfer und Heizkörper sind ungefähr auf derselben Fahrzeughöhe angeordnet (Höhe in z-Richtung der Grundflächen von Verdampfer und Heizkörper sind daher ungefähr gleich). Hierdurch ergibt sich bei den Klimaanlagen des Stands der Technik ein hoher Platzbedarf in horizontaler Ebene. Ein Raumangebot, das sich besonders in z-Richtung erstreckt, kann daher nicht optimal genutzt werden.

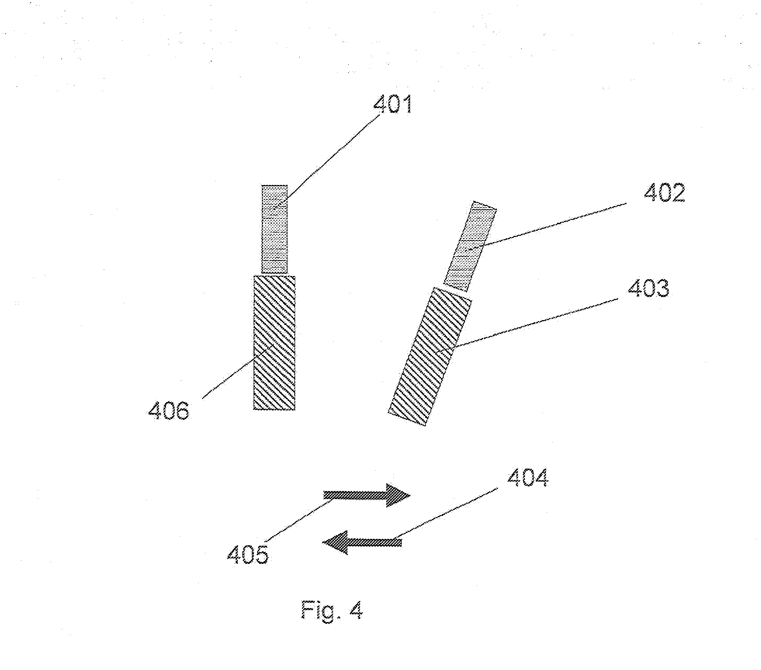

Fig, 4 zeigt zwei erfindungsgemäße Anordnungen eines Verdampfers 403, 406 und eines Heizkörpers 401, 402, Hierbei ist bei der Linken Anordnung der Verdampfer 406 und der Heizkörper 401 ungefähr senkrecht zur Fahrtrichtung 404 angeordnet. Die generelle Strömungrichtung der Luft 405 in der erfindungsgemäßen Klimaanlage ergibt sich als die zur Fahrtrichtung 404 entgegen gesetzte Richtung 405. Im rechten Beispiel der Fig. 4 sind der Verdampfer 403 und der Heizkörper 402 gleichmäßig geneigt. Hierdurch kann zwar immer noch eine relativ hohe Einbaumöglichkeit in z-Richtung genutzt werden, jedoch kann durch eine derartige Neigung des Verdampfers 403 und des Heizkörpers 402 der Raumbedarf auch in x- und/oder y-Richtung erhöht werden und gleichzeitig die benötigte Höhe der Klimaanlage verringert werden, wodurch sich eine kompaktere Bauweise ergeben kann. Die Neigung kann sowohl in wie auch entgegen der Fahrtrichtung 404 ausgeführt sein.

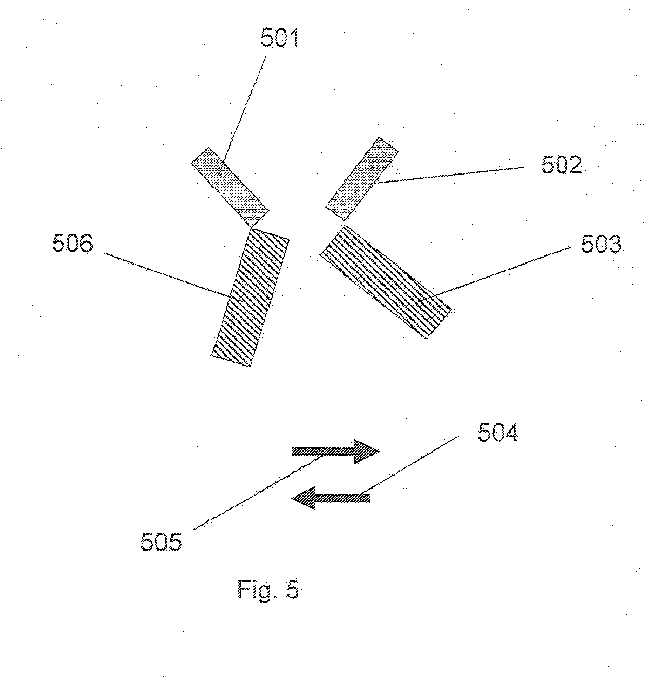

Fig. 5 zeigt zwei weitere alternative Ausführungsformen von Anordnungen eines Verdampfers 506, 503 und eines Heizkörpers 501, 502, wobei hierbei Verdampfer 503, 506 und jeweils dazugehörender Heizkörper 501, 502 zueinander geneigt ausgerichtet sind, wodurch sich eine kompakte Bauweise einer Klimaanlage ergeben kann. Insgesamt ergibt sich bei den Ausführungsformen der Fig. 5 eine ungefähr v-förmige Anordnung eines Verdampfers 506, 503 und eines dazugehörenden Heizkörpers 501, 502. Die Fahrtrichtung 504 und die Strömungsrichtung der Luft 505 sind zueinander entgegen gesetzt ausgerichtet.

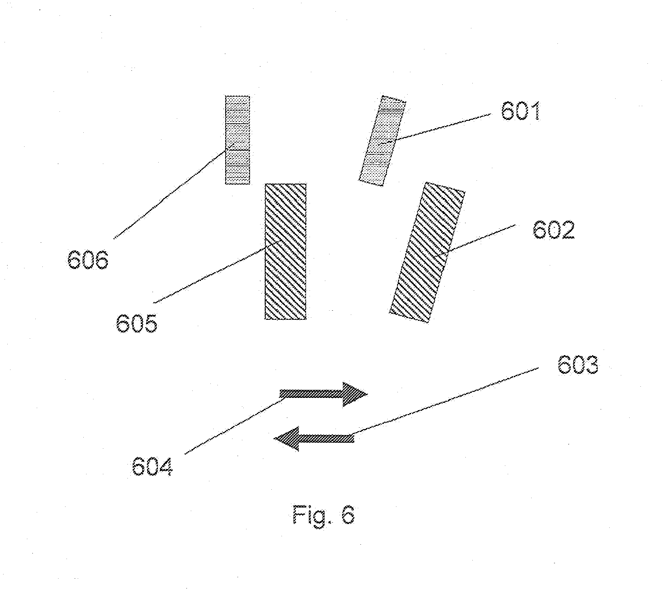

Fig. 6 zeigt zwei weitere alternative Anordnungen von Verdampfern 605, 602 und Heizkörper 601, 606, wobei die Heizkörper 601, 606 zu den Verdampfern 605, 602 räumlich versetzt ausgebildet sind.

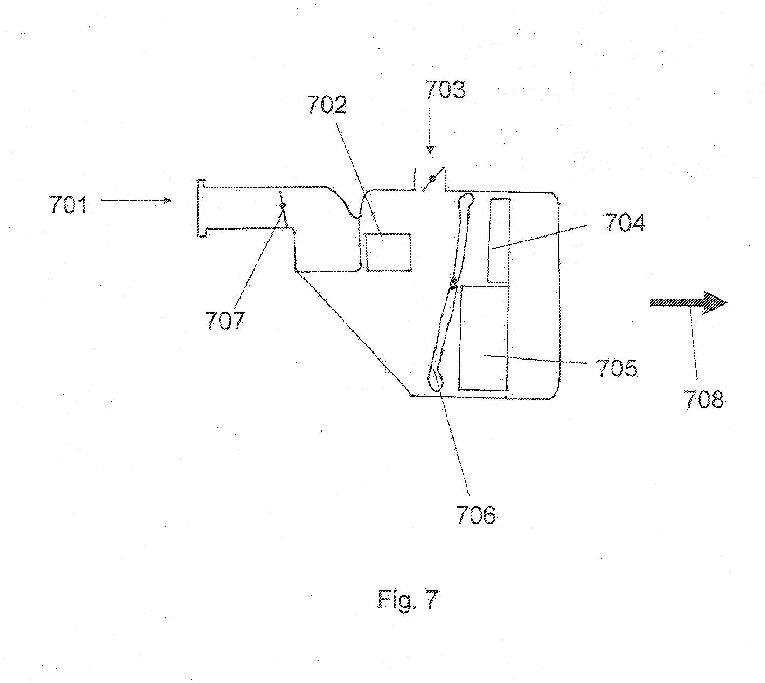

Fig. 7 zeigt einen Teil einer Klimaanlage eines Fahrzeugs im Längsschnitt mit einem Verdampfer 705 und einem Heizkörper 704, wobei strömungstechnisch hinter der Anordnung mit Verdampfer 705 und Heizkörper 704 eine Rollbandkassette 706 als Temperaturmischorgan angeordnet sein kann. Die eingeströmte Luft kann durch die Austrittsöffnung Belüftung 701 und/oder die Austrittsöffnung Fußraum 702 und/oder die Austrittsöffnung Defrost 703 die Klimaanlage wieder verlassen. Die Fahrtrichtung des Fahrzeugs in dem die Klimaanlage eingebaut sein kann, wird durch den Pfeil 708 dargestellt.

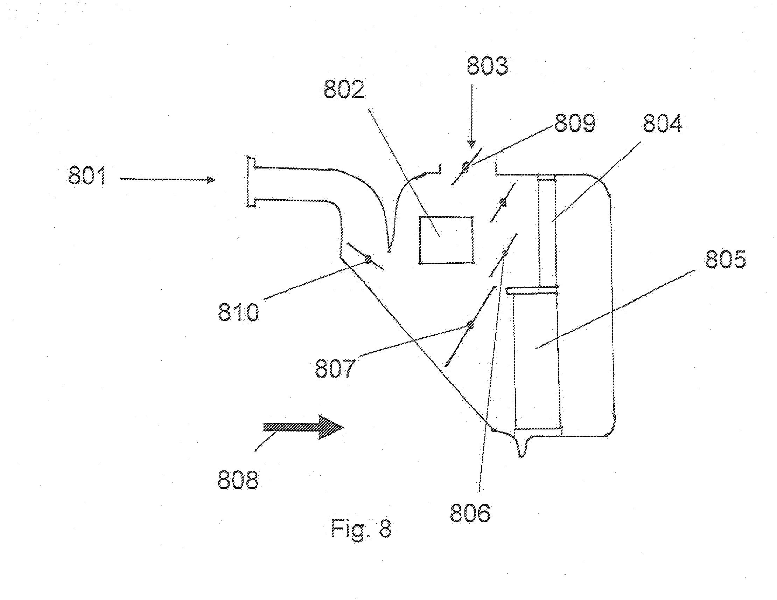

Fig. 8 zeigt einen Teil einer erfindungsgemäßen Klimaanlage mit einem Verdampfer 805 über den ein Heizkörper 804 angeordnet ist. Die Fahrtrichtung eines Fahrzeugs, in dem die erfindungsgemäße Klimaanlage eingebaut sein kann, wird durch einen Pfeil 808 angezeigt. Die eingeströmte Luft passiert zunächst den Verdampfer 805 und/oder den Heizkörper 804 und kann durch mittig gelagerte Klappen 806, 807, die als Temperaturmischorgane wirken können, in den Innenraum der Klimaanlage weiter geleitet werden. Aus der Klimaanlage kann die aufbereitete Luft durch Austrittsöffnungen Belüftung 801, Fußraum 802, Defrost 803 aus der Klimaanlage wieder austreten. Beispielsweise kann mit den mittig gelagerten Klappen 809, 810 der Austritt der Luft aus der Klimaanlage gesteuert werden, wobei mit der Klappe 809 der Abfluss der resultierenden Luft durch die Austrittsöffnung 803 Defrost und mit der Klappe 810 der Abfluss der resultierenden Luft durch die Austrittsöffnung 801 geregelt werden kann.

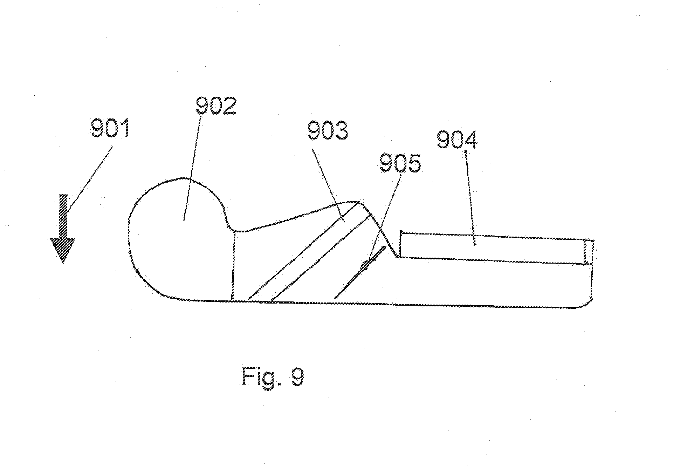

Fig. 9 zeigt eine weitere erfindungsgemäße Klimaanlage in einem Querschnitt, wobei ein Gebläse 902, ein Filter 903 und ein Heizkörper 904 dargestellt sind. Unterhalb des Heizkörpers 904 kann erfindungsgemäß ein Verdampfer angeordnet sein, Die Fahrtrichtung eines Fahrzeuges in dem die erfindungsgemäße Klimaanlage eingebaut sein kann, wird durch einen Pfeil 901 dargestellt. Eine Klappe 905, die beispielsweise mittig gelagert sein kann, steuert den vom Filter 903 zum Verdampfer/Heizkörper 904 strömenden Luftstrom, Eine weitere Klappe, die nicht dargestellt ist, stellt die Luft zu dem jeweils anderem Wärmetauscher.

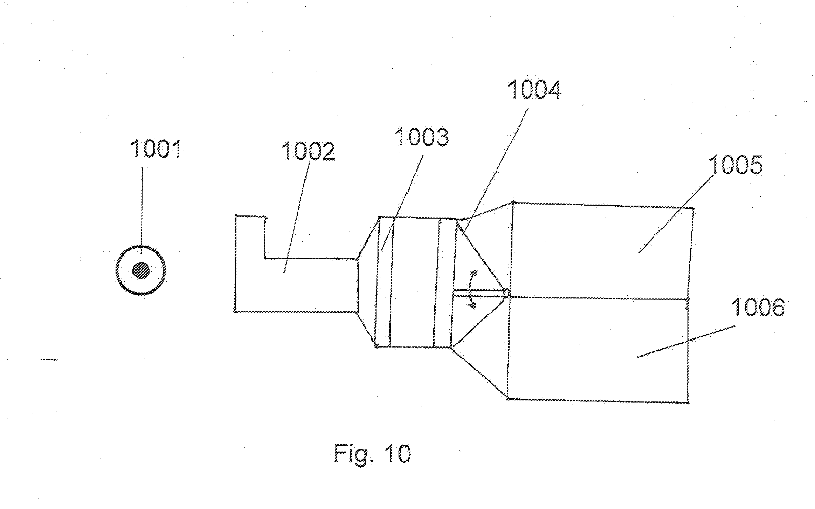

Fig. 10 zeigt einen weiteren Teil einer erfindungsgemäßen Klimaalage mit einem Gebläse 1002, einem Filter 1003, einer Temperaturmischklappe 1004 mit horizontaler Drehachse, einem Heizkörper 1005 und einem Verdampfer 1006, wobei der Heizkörper 1005 oberhalb des Verdampfers 1006 angeordnet sein kann.

In Fig. 10 wird die Luft mittels nur einer Klappe auf die Komponenten, d.h. die Heizkörper 904, 1005 bzw. den Verdampfer 1006 aufgeteilt. Dazu wird die Klappe seitlich vor den Komponenten angeordnet und kann mit einer vertraten oder horizontalen Drehachse ausgeführt sein. Mit derartigen Ausgestaltungen ist nur eine Temperaturzone möglich. Eine Anordnung mehrerer Mischorgane direkt vor oder nach den Komponenten ermöglichen dagegen bis zu vier Temperaturzonen.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### Bezugszeichenliste

- 101: Verdampfer
- 102: Strömungsdchtung Luft
- 103: Austrittsöffnung Defrost
- 104: Austrittsöffnung Belüftung
- 105: Austrittsöffnung Fußbereich
- 106: Heizkörper
- 107: Fahrtrichtung
- 108: Strömungsrichtung Luft
- 201: Verdampfer
- 202: Heizkörper
- 203: Austrittsöffnung Defrost
- 204: Austrittsöffnung Belüftung
- 205: Austrittsöffnung Fußbereich
- 206: Strömungsrichtung Luft
- 207: Fahrtrichtung
- 208: Strömungsrichtung Luft
- 301: Strömungsrichtung Luft
- 302: Austrittsöffnung
- 303: Heizkörper
- 304: Strömungsrichtung Luft
- 305: Verdampfer
- 306: Fahrtrichtung
- 307: Strömungsrichtung Luft
- 401: Heizkörper
- 402: Heizkörper
- 403: Verdampfer
- 404: Fahrtrichtung
- 405: Strömungsrichtung Luft
- 406: Verdampfer
- 501: Heizkörper
- 502: Heizkörper
- 503: Verdampfer
- 504: Fahrtrichtung
- 505: Strömungsnchtung Luft
- 506: Verdampfer
- 601: Heizkörper
- 602: Verdampfer
- 603: Fahrtrichtung
- 604: Strömungsrichtung Luft
- 605: Verdampfer
- 606: Heizkörper
- 701: Austrittsöffnung Belüftung
- 702: Austrittsöffnung Fußraum
- 703: Austrittsöffnung Defrost
- 704: Heizkörper
- 705: Verdampfer
- 706: Rollbandkassette
- 707: Klappe
- 708: Fahrtrichtung
- 801: Austrittsöffnung Belüftung
- 802: Austrittsöffnung Fußraum
- 803: Austrittsöffnung Defrost
- 804: Heizkörper
- 805: Verdampfer
- 806: Klappe
- 807: Klappe
- 808: Fahrtrichtung
- 809: Klappe
- 810: Klappe
- 901: Fahrtrichtung
- 902: Gebläse
- 903: Filter
- 904: Heizkörper
- 905: Klappe
- 1001: Fahrtrichtung
- 1002: Gebläse
- 1003: Filter
- 1004: Klappe
- 1005: Heizkörper
- 1006: Verdampfer

## Patentansprüche

1. Klimaanlage für ein Kraftfahrzeug umfassend
einen Verdampfer (406) zum Abkühlen der in die Klimaanlage einströmenden Luft und
einen Heizkörper (401) zum Aufheizen der Luft,
**dadurch gekennzeichnet, dass**
der Heizkörper (401) und der Verdampfer (406) zumindest teilweise übereinander angeordnet sind.

2. Klimaanlage nach Anspruch 1, **dadurch gekennzeichnet, dass** der Heizkörper (401) über dem Verdampfer (406) angeordnet ist.

3. Klimaanlage nach einem der Ansprüche 1 oder 2, **dadurch gekennzeichnet, dass** der Heizkörper (401) und der Verdampfer (406) senkrecht zur Fahrtrichtung des Kraftfahrzeuges angeordnet sind.

4. Klimaanlage nach einem der vorhergehenden Ansprüche, **dadurch gekennzeichnet, dass** der Verdampfer (406) und der Heizkörper (401) in einer Linie angeordnet sind.

5. Klimaanlage nach einem der vorhergehenden Anspruche, **dadurch gekennzeichnet, dass** der Verdampfer (506, 605) und der Heizkörper (501, 606) nicht in einer Linie angeordnet sind.

6. Klimaanlage nach einem der vorhergehenden Ansprüche, **dadurch gekennzeichnet dass** ein erster Strahl, der ausgehend vom Boden des Fahrzeuges durch den Verdampfer (506) gerichtet ist mit der Fahrzeugrichtung einen Winkel zwischen 90° und 180° aufspannt, wobei die Winkelwerte 90° und 180° nicht erreicht werden.

7. Klimaanlage nach einem der Anspruche 1 bis 5, **dadurch gekennzeichnet, dass** ein erster Strahl, der ausgehend vom Boden des Fahrzeuges durch den Verdampfer (503) gerichtet ist, mit der Fahrzeugrichtung einen Winkel zwischen 0° und 90° aufspannt, wobei die Winkelwerte 0° und 90° nicht erreicht werden.

8. Klimaanlage nach einem der vorhergehenden Ansprüche, **dadurch gekennzeichnet, dass** ein zweiter Strahl, der ausgehend vom Boden des Fahrzeuges durch den Heizkörper (502) gerichtet ist, mit der Fahrzeugrichtung einen Winkel zwischen 90° und 180° aufspannt, wobei die Winkelwerte 90° und 180° nicht erreicht werden.

9. Klimaanlage nach einem der Ansprüche 1 bis 7, **dadurch gekennzeichnet, dass** ein zweiter Strahl, der ausgehend vom Boden des Fahrzeuges durch den Heizkörper (501) gerichtet ist, mit der Fahrzeugrichtung einen Winkel zwischen 0° und 90° aufspannt, wobei die Winkelwerte 0° und 90° nicht erreicht werden.
